Europäisches Patentamt

European Patent Office

Office européen des brevets

(19)

(11) Veröffentlichungsnummer : **0 432 812 B1**

(12) # EUROPÄISCHE PATENTSCHRIFT

(45) Veröffentlichungstag der Patentschrift :
**27.10.93 Patentblatt 93/43**

(51) Int. Cl.⁵ : **B09B 3/00,** A62D 3/00

(21) Anmeldenummer : **90202916.4**

(22) Anmeldetag : **05.11.90**

(54) **Verfahren zur Reinigung von kontaminierten Böden.**

(30) Priorität : **15.11.89 DE 3937952**

(43) Veröffentlichungstag der Anmeldung :
**19.06.91 Patentblatt 91/25**

(45) Bekanntmachung des Hinweises auf die
Patenterteilung :
**27.10.93 Patentblatt 93/43**

(84) Benannte Vertragsstaaten :
**AT BE CH DE DK ES FR GB IT LI NL SE**

(56) Entgegenhaltungen :
**EP-A- 0 070 593**
**EP-A- 0 284 754**
**DE-A- 3 604 761**
**DE-A- 3 706 684**
**DE-C- 3 633 699**
**NL-A- 8 503 093**

(56) Entgegenhaltungen :
**US-A- 4 132 010**
**PATENT ABSTRACTS OF JAPAN, Band 10, Nr.**
**36 (C-328)[2093], 13. Februar 1986, Seite 77 C**
**328; & JP-A-60 187 398 (KUBOTA TEKKO K.K.)**
**24-09-1985**

(73) Patentinhaber : **METALLGESELLSCHAFT**
**Aktiengesellschaft**
**Postfach 10 15 01, Reuterweg 14**
**D-60015 Frankfurt (DE)**

(72) Erfinder : **Rosenstock, Friedrich**
**Alt-Bornheim 7-9**
**W-6000 Frankfurt am Main (DE)**
Erfinder : **Güntner, Jochen**
**Magdeburger Strasse 2**
**D-8756 Kahl (DE)**
Erfinder : **Haite, Elmar**
**deBary Strasse 5**
**W-6000 Frankfurt am Main (DE)**

EP 0 432 812 B1

## Beschreibung

Die Erfindung betrifft ein Verfahren zur Reinigung von kontaminierten Böden, wobei die Böden mit Wasserdampf behandelt werden und der austretende Dampf kondensiert wird.

Die Dekontaminierung von Böden oder Halden, die durch Kohlenwasserstoffe, Öl, andere organische Verbindungen oder Schwermetalle verunreinigt sind, wird immer dringender, ist aber auf der anderen Seite auch sehr aufwendig und schwierig. Der Gehalt der Böden an mineralischen Bestandteilen liegt über 60 Gew.-% und in den meisten Fällen über 70 Gew.-%. die Verunreinigungen befinden sich an der Oberfläche der Körner und sind meistens nicht wasserlöslich.

Aus der DE-OS 36 04 761 ist es bekannt, mit Kohlenwasserstoffen kontaminiertes Erdreich in einem Behandlungsgefäß bei atmosphärischem Druck bis wenig darüber liegendem Druck auf eine Temperatur zu erhitzen, die oberhalb der Siedetemperatur der Kohlenwasserstoffe liegt, ein inertes Trägergas zuzuführen und das austretende Gemisch aus Wasserdampf, verdampften Kohlenwasserstoffen und Trägergas einer fraktionierten Kondensation mit Abzug der Kondensate zu unterwerfen. Die Erhitzung erfolgt unter wenigstens teilweiser indirekter Zufuhr der Erhitzungswärme bevorzugt in einem Drehrohr. Die Erhitzung des kontaminierten Erdreichs muß auf einer Temperatur von etwa 400°C erfolgen, wobei auch das im Erdreich enthaltene Wasser auf diese Temperatur erhitzt werden muß.

Aus der DE-PS 36 33 699 ist es bekannt, kontaminierte Erde unter Zugabe von Umlaufwasser durch Homogenisierung und Zerkleinerung in eine pumpfähige Suspension zu überführen, die Suspension in einem Extraktionssystem bei einer Temperatur von 120 bis 180°C und einem Druck von 8 bis 12 bar im Gegenstrom mit Umlaufwasser zu behandeln, die aus dem Extraktionssystem abgezogene Suspension bis auf eine Restfeuchte von unter 30 Gew.-% zu trocknen, und aus dem Umlaufwasser die gelösten Stoffe durch Abkühlung abzutrennen. Der Druck im Extraktionssystem wird so hoch eingestellt, daß er oberhalb des Wasserverdampfungspunktes liegt. Dieses Verfahren entfernt nur die in Wasser löslichen Stoffe.

Aus der DE-OS 37 06 684 ist es bekannt, kontaminierte Böden durch direkte oder indirekte Beheizung in einem Drehrohrofen oder Wirbelbettofen mit Heißgasen oder Heißdampf auf eine Temperatur von 200 bis 700°C aufzuheizen, die Schadstoffkomponenten zusammen mit dem natürlichen Wassergehalt abzudampfen, aus den Abgasen durch Kondensation den Hauptteil des Wasserdampfes auszukondensieren, das Kondensat zu reinigen und die Restgase ebenfalls zu reinigen. Das trockene Bodenmaterial durchläuft bei direkter Beheizung kurzzeitig die Feuerungszone, wobei organische Restsubstanz oxidiert werden soll. Die bei der Beheizung entstehenden Dämpfe werden durch Anlegung eines Unterdrucks im System abgesaugt. Bei diesem Verfahren muß der Boden auf hohe Temperaturen aufgeheizt werden, und es können nur solche Verunreinigungen entfernt werden, die verdampfen.

Der Erfindung liegt die Aufgabe zugrunde, möglichst viele organische und anorganische Verunreinigungen möglichst weitgehend und mit möglichst geringem Aufwand aus Böden zu entfernen.

Die Lösung der Aufgabe erfolgt erfindungsgemäß dadurch, daß eine Schicht des Bodens in einem Druckgehäuse auf eine gasdurchlässige Unterlage aufgebracht wird, Dampf mit einer Temperatur von 100 bis 190°C und einem Druck von 1 bis 12 bar in das Druckgehäuse eingeleitet und durch die Schicht geleitet wird, der aus der Schicht austretende Dampf aus dem Druckgehäuse abgeleitet und kondensiert wird, das Kondensat einer Reinigung zugeführt wird und der Feststoff als gereinigter Boden abgeführt wird. Das Aufbringen des Bodens auf die gasdurchlässige Unterlage erfolgt zweckmäßigerweise in Form einer wäßrigen Suspension. Der Boden muß eine gute Gasdurchlässigkeit haben und darf kein grobes Korn enthalten. Grobkorn über etwa 2 mm und vorzugsweise über 1 mm wird vor der Aufgabe entfernt. Wenn der Boden im Rohzustand keine ausreichende Gasdurchlässigkeit aufweist, wird die Gasdurchlässigkeit durch entsprechende Entschlämmung erhöht. Die Gasdurchlässigkeit kann auch durch Zumischung von Böden mit relativ hoher Gasdurchlässigkeit oder durch Zumischung von anderen Stoffen, z.B. Kalksplitt, erhöht werden. Vorzugsweise wird die Schicht des Bodens auf einer horizontal angeordneten gasdurchlässigen Unterlage aufgebracht und der Dampf von oben nach unten durch die Schicht geleitet. Es ist jedoch auch möglich, die Schicht durch geeignete Materialien, wie z.B. Filtergeweben, oben abzudecken und den Dampf von unten nach oben durch die Schicht zu leiten.

Die Entfernung von Grobkorn aus dem Boden und eine eventuelle Entschlämmung des Bodens kann insbesondere nach dem Verfahren der DE-OS 38 15 461 erfolgen. Bei der Einleitung des Dampfes erfolgt zunächst eine Entwässerung der Schicht, bei der das Kapillarwasser ausgetrieben wird. Danach wird die Schicht durch den nunmehr stark durchströmenden Dampf aufgeheizt. Als Dampf kann Sattdampf oder Naßdampf verwendet werden. Sattdampf ist trocken gesättigter Dampf. Naßdampf besteht aus Sattdampf mit siedendem Wasser. Die Entwässerung erfolgt vorzugsweise mit Sattdampf. Auch das Aufheizen der Schicht erfolgt zweckmäßigerweise mit Sattdampf.

Eine vorzugsweise Ausgestaltung besteht darin, daß die spezifische Oberfläche des kontaminierten Bodens vor der Aufgabe auf die gasdurchlässige Unterlage auf einen Wert unter 10 000 cm$^2$/g eingestellt wird.

2

Eine niedrigere spezifische Oberfläche, d.h. eine bessere Permeabilität, ergibt im allgemeinen bessere Betriebsbedingungen. Die Einstellung der spezifischen Oberfläche erfolgt durch Entschlämmen oder durch Mischen von Böden mit unterschiedlichen spezifischen Oberflächen.

Eine vorzugsweise Ausgestaltung besteht darin, daß eine wäßrige Suspension des kontaminierten Bodens auf die gasdurchlässige Unterlage derart aufgebracht wird, daß die entwässerte Schicht eine Luftdurchlässigkeit von 20 bis 150 Nm³ pro Stunde und Quadratmeter Schichtoberfläche aufweist. Der Ausdruck "entwässerte Schicht" soll bedeuten, daß in der Schicht kein Kapillarwasser mehr vorhanden ist. Die Entwässerung der Schicht erfolgt zweckmäßigerweise durch Einleiten des Dampfes, sie kann jedoch eventuell auch mittels Preßluft erfolgen. Die Luftdurchlässigkeit der Schicht wird durch Einstellung der Schichthöhe der getrockneten Schicht in Abhängigkeit von der vorliegenden spezifischen Oberfläche des kontaminierten Bodens eingestellt. Diese Luftdurchlässigkeit ergibt gute Betriebsbedingungen.

Eine vorzugsweise Ausgestaltung besteht darin, daß die Schicht des Bodens auf der gasdurchlässigen Unterlage zunächst entwässert wird und dann Sattdampf mindestens so lange durchgeleitet wird, bis die Schicht etwa die Temperatur des Sattdampfes angenommen hat. Bei der Entwässerung wird zunächst nur das Kapillarwasser ausgetrieben, und es tritt praktisch kein Gas durch die Schicht durch. Nach der Entwässerung erfolgt ein Durchbruch, der Dampf strömt durch die Schicht, Wasserdampf kondensiert in der Schicht, und die Schicht wird aufgeheizt. Nach Aufheizung des unteren Teiles der Schicht erfolgt ein voller Dampfdurchgang. Nach der Aufheizung der gesamten Schicht wird so lange Satt- oder Naßdampf durchgeleitet, bis die gewünschte Endkonzentration an Schadstoffen im Boden erreicht ist. Durch diese Arbeitsweise werden die Schadstoffe entfernt, die bei den Betriebsbedingungen verdampfen, schmelzen oder löslich sind.

Eine vorzugsweise Ausgestaltung besteht darin, daß nach dem Entwässern oder Aufheizen der Schicht Naßdampf mit oxidierenden Stoffen durch die Schicht geleitet wird. Als oxidierende Stoffe kommt in erster Linie Luft infrage, jedoch kann auch zum Beispiel sauerstoffangereicherte Luft und/oder $H_2O_2$ verwendet werden. Die oxidierenden Stoffe können nach der Trocknung bereits mit dem Dampf eingeleitet werden, dann erfolgt bereits in den aufgeheizten oberen Schichten eine Oxidation, die oxidierenden Stoffe können aber auch erst nach vollständiger Aufheizung der gesamten Schicht mit dem Dampf eingeleitet werden. Es ist auch möglich, nach der Aufheizung der gesamten Schicht mittels des Dampfes nur ein heißes oxidierendes Gas mit entsprechendem Druck und entsprechender Temperatur durch die Schicht zu leiten. Durch den Zusatz der oxidierenden Stoffe werden naßoxidierbare Schadstoffe oxidiert und aus dem Boden entfernt.

Eine vorzugsweise Ausgestaltung besteht darin, daß ein Teil des austretenden Dampfes zur Vorwärmung der wäßrigen Suspension des kontaminierten Bodens vor dessen Aufgabe zurückgeführt wird. Dadurch kann der Wärmeverbrauch beträchtlich gesenkt werden.

Eine Ausgestaltung besteht darin, daß mit TNT (Trinitrotoluol) kontaminierte Böden eingesetzt werden. Diese Böden können mit dem Verfahren besonders gut gereinigt werden.

Die Erfindung wird anhand von Ausführungsbeispielen näher erläutert. KW bedeutet Kohlenwasserstoffe, PAK bedeutet polyzyklische aromatische Kohlenwasserstoffe.

Beispiel 1

100 g eines mit Kohlenwasserstoffen verunreinigten Bodens wurden mit Wasser im Verhältnis 1:2 gemischt und auf eine waagerechte Drucknutsche aufgegeben. Der Boden hatte eine spezifische Oberfläche von 2 100 cm²/g, die Korngröße lag zu 100 % unter 0,5 mm und zu 80 % unter 0,051 mm. Die Schichtdicke auf der Drucknutsche betrug 5 cm und die Luftdurchlässigkeit nach dem Trocknen 90 Nm³/h . m².

Es wurde Sattdampf von 10 bar und 180°C eingeleitet bis die Schicht des Bodens auf die Temperatur des Dampfes aufgeheizt war. Danach wurde ein Gemisch aus Naßdampf und Luft von 10 bar und 157°C über 15 min eingeleitet.

Die Analyse des so behandelten Bodens ergab:

|  | Gew.-% | gesamte KW [mg/kg] | PAK [mg/kg] |
|---|---|---|---|
| gereinigter Boden | 99,2 | 320 | 18 |
| Rohboden | 100,0 | 4 650 | 2 300 |

Beispiel 2

Der gleiche Boden wie im Beispiel 1 wurde wie im Beispiel 1 getrocknet und aufgeheizt. Danach wurde für 15 min weiterhin Sattdampf von 10 bar und 180°C ohne Luftzusatz eingeleitet.

Die Analyse des so behandelten Bodens ergab:

| | Gew.-% | gesamte KW [mg/kg] | PAK [mg/kg] |
|---|---|---|---|
| gereinigter Boden | 99,3 | 870 | 24 |
| Rohboden | 100,0 | 4 650 | 2 300 |

Beispiel 3

100 g eines mit TNT verunreinigten Bodens wurden mit Wasser im Verhältnis 1:1,5 gemischt und auf die Drucknutsche aufgegeben. Der Boden hatte eine spezifische Oberfläche von 800 $cm^2/g$, die Korngröße lag zu 100 % unter 1 mm und zu 80 % unter 0,102 mm. Die Schichtdicke auf der Drucknutsche betrug 5 cm und die Luftdurchlässigkeit nach dem Trocknen 120 $Nm^3/h \cdot m^2$.

Es wurde Sattdampf von 4 bar und 143°C eingeleitet, die Schicht des Bodens auf die Temperatur des Dampfes aufgeheizt und danach noch 15 min derselbe Sattdampf durchgeleitet.

Die Analysen von zwei Böden mit unterschiedlichen Gehalten an TNT ergaben nach der Behandlung:

| | Gew.-% | TNT-Gehalt [mg/kg] |
|---|---|---|
| a) gereinigter Boden | 99,98 | 0,324 |
| Rohboden | 100,0 | 150,0 |
| b) gereinigter Boden | 99,22 | 3,0 |
| Rohboden | 100,0 | 5 931,0 |

Die Vorteile der Erfindung bestehen darin, daß verunreinigte Böden mit relativ geringem Aufwand gereinigt werden können, wobei als gereinigtes Produkt ein wiederverwendbarer Boden anfällt.

**Patentansprüche**

1. Verfahren zur Reinigung von kontaminierten Böden, wobei die Böden mit Wasserdampf behandelt werden und der austretende Dampf kondensiert wird, dadurch gekennzeichnet, daß eine Schicht des Bodens in einem Druckgehäuse auf eine gasdurchlässige Unterlage aufgebracht wird, Wasserdampf mit einer Temperatur von 100 bis 190°C und einem Druck von 1 bis 12 bar in das Druckgehäuse eingeleitet und durch die Schicht geleitet wird, der aus der Schicht austretende Dampf aus dem Druckgehäuse abgeleitet und kondensiert wird, das Kondensat einer Reinigung zugeführt wird und der Feststoff als gereinigter Boden abgeführt wird.

2. Verfahren nach Anspruch 1, dadurch gekennzeichnet, daß die spezifische Oberfläche des kontaminierten Bodens vor der Aufgabe auf die gasdurchlässige Unterlage auf einen Wert unter 10 000 $cm^2/g$ eingestellt wird.

3. Verfahren nach Anspruch 1 oder 2, dadurch gekennzeichnet, daß eine wäßrige Suspension des kontaminierten Bodens auf die gasdurchlässige Unterlage derart aufgebracht wird, daß die entwässerte Schicht eine Luftdurchlässigkeit von 20 bis 150 Nm³ pro Stunde und Quadratmeter Schichtoberfläche aufweist.

4. Verfahren nach einem der Ansprüche 1 bis 3, dadurch gekennzeichnet, daß die Schicht des Bodens auf der gasdurchlässigen Unterlage zunächst entwässert wird und dann Sattdampf mindestens so lange durchgeleitet wird bis die Schicht etwa die Temperatur des Sattdampfes angenommen hat.

5. Verfahren nach einem der Ansprüche 1 bis 4, dadurch gekennzeichnet, daß nach dem Trocknen oder Aufheizen der Schicht Naßdampf mit oxidierenden Stoffen durch die Schicht geleitet werden.

6. Verfahren nach einem der Ansprüche 1 bis 5, dadurch gekennzeichnet, daß ein Teil des austretenden Dampfes zur Vorwärmung der wäßrigen Suspension des kontaminierten Bodens zurückgeführt wird.

7. Verfahren nach einem der Ansprüche 1 bis 4 oder 6, dadurch gekennzeichnet, daß mit TNT kontaminierte Böden eingesetzt werden.

## Claims

1. A process for cleaning contaminated soil, in which the soil is treated with steam and the emerging steam is condensed, characterised in that a layer of the soil is applied to a gas-permeable base in a pressurised housing, steam at a temperature of 100 to 190°C and at a pressure of 1 to 12 bar is introduced into the pressurised housing and is passed through the layer, the steam emerging from the layer is discharged from the pressurised housing and condensed, the condensate is sent for cleaning and the solids are removed as cleaned soil.

2. A process according to Claim 1, characterised in that the specific surface area of the contaminated soil before being charged onto the gas-permeable base is set to a value of below 10,000 cm²/g.

3. A process according to Claim 1 or 2, characterised in that an aqueous suspension of the contaminated soil is applied to the gas-permeable base such that the dewatered layer has an air permeability of 20 to 150 Nm³ per hour and per square metre of layer surface.

4. A process according to one of Claims 1 to 3, characterised in that the layer of the soil on the gas-permeable base is first dewatered and then saturated steam is passed through at least until the layer has assumed approximately the temperature of the saturated steam.

5. A process according to one of Claims 1 to 4, characterised in that after the drying or heating of the layer wet steam with oxidising substances is passed through the layer.

6. A process according to one of Claims 1 to 5, characterised in that a portion of the emerging steam is recycled for preheating the aqueous suspension of the contaminated soil.

7. A process according to one of Claims 1 to 4 or 6, characterised in that soils contaminated with TNT are used.

## Revendications

1. Procédé d'épuration de sols pollués, qui consiste à traiter les sols par de la vapeur d'eau et à condenser la vapeur qui sort, caractérisé en ce qu'il consiste à déposer une couche du sol dans un autoclave sur un support perméable aux gaz, à introduire dans l'autoclave de la vapeur d'eau à une température de 100 à 190°C sous une pression de 1 à 12 bars et à la faire passer à travers la couche, à évacuer de l'autoclave la vapeur sortant de la couche et à la condenser, à envoyer le produit condensé à une épuration et à évacuer la matière solide en tant que sol épuré.

2. Procédé suivant la revendication 1, caractérisé en ce qu'il consiste à régler la surface spécifique du sol épuré avant de le charger sur le support perméable aux gaz à une valeur inférieure à 10 000 cm²/g.

3. Procédé suivant la revendication 1 ou 2, caractérisé en ce qu'il consiste à déposer une solution aqueuse du sol pollué sur le support perméable aux gaz, de manière que la couche déshydratée présente une perméabilité à l'air de 20 à 150 m³ normaux par heure et par mètre carré de surface de couche.

4. Procédé suivant l'une des revendications 1 à 3, caractérisé en ce qu'il consiste à déshydrater d'abord la couche du sol sur le support perméable aux gaz, puis à envoyer de la vapeur saturée au moins tant que la couche a pris à peu près la température de la vapeur saturée.

5. Procédé suivant l'une des revendications 1 à 4, caractérisé en ce qu'il consiste à envoyer, après le séchage ou le chauffage de la couche, de la vapeur humide avec des substances oxydantes à travers la couche.

6. Procédé suivant l'une des revendications 1 à 5, caractérisé en ce qu'il consiste à retourner une partie de la vapeur qui sort pour préchauffer la suspension aqueuse du sol pollué.

7. Procédé suivant l'une des revendications 1 à 4 ou 6, caractérisé en ce qu'il consiste à utiliser des sols pollués par du trinitrotoluène.